# EUROPÄISCHE PATENTSCHRIFT

(11) **EP 1 053 153 B1**
(45) Veröffentlichungstag und Bekanntmachung des Hinweises auf die Patenterteilung: **19.03.2003**
(21) Anmeldenummer: 99907484.2
(22) Anmeldetag: 03.02.1999
(51) Int. Cl.: B60T 8/88

(54) **VERFAHREN ZUR BEHANDLUNG VON FEHLERN IN EINEM ELEKTRONISCHEN BREMSSYSTEM UND ZUGEHÖRIGE VORRICHTUNG**
METHOD FOR HANDLING ERRORS IN AN ELECTRONIC BRAKE SYSTEM AND CORRESPONDING DEVICE
PROCEDE POUR LE TRAITEMENT D'ERREURS DANS UN SYSTEME DE FREINAGE ELECTRONIQUE ET DISPOSITIF ASSOCIE

(30) Priorität: 07.02.1998 DE 19804933; 22.07.1998 DE 19832950
(43) Veröffentlichungstag der Anmeldung: 22.11.2000
(73) Patentinhaber: Continental Teves AG & Co. oHG, 60488 Frankfurt (DE)
(72) Erfinder: BÖHM, Jürgen, D-65558 Oberneisen (DE); STÖLZL, Stefan, D-69469 Weinheim (DE); WILLIMOWSKI, Peter, D-63486 Bruchköbel (DE); HOFFMANN, Oliver, D-60486 Frankfurt am Main (DE); NELL, Joachim, D-63452 Hanau (DE); OEHLER, Rainer, D-64295 Darmstadt (DE)
(86) Internationale Anmeldenummer: EP9900687
(87) Internationale Veröffentlichungsnummer: WO99039955

(56) Entgegenhaltungen:
- DE-C- 4 400 203
- US-A- 5 594 646
- US-A- 5 707 117

## Beschreibung

Die Erfindung bezieht sich auf ein Verfahren zur Behandlung von Fehlern in einem modular aufgebauten, aus mehreren intelligenten Modulen bestehenden elektronischen Bremssystem von Fahrzeugen.

Die Erfindung betrifft ferner eine Vorrichtung zur Behandlung von Fehlern in einem modular aufgebauten, aus mehreren intelligenten Modulen bestehenden elektronischen Bremssystem von Fahrzeugen, das mindestens einen Zentralrechner zur Ansteuerung der Radbremsen abhängig von dem Bremswunsch des Fahrers und dem Betriebszustand des Bremssystems aufweist.

Bremsanlagen für Kraftfahrzeuge werden immer komplexer. Das Antiblockiersystem (ABS), die Antriebsschlupfregelung und Fahrzeugstabilisierungssysteme beispielsweise verlangen individuelle Bremseingriffe für einzelne Räder. Der Fahrer merkt dies beispielsweise durch das Pulsieren (Rubbeln) des Bremspedals bei der ABS-Regelung, was vom Fahrer nicht immer als angenehm empfunden wird und zu Fehlreaktionen führen kann.

Abhilfe schafft eine mechanische Entkopplung von Radbremsbetätigung und Bremspedal. Letzteres sorgt über geeignete Sensoren nur noch für die Erfassung des Fahrer-Bremswunsches, der elektrisch an die Bremsen weitergeleitet wird. Systeme, die eine derartige Entkopplung aufweisen, sind als "Brake-By-Wire-Systeme" bekannt geworden und sind beispielsweise in der DE-Z "ATZ Automobiltechnische Zeitschrift 98 (1996) 6, Seiten 328 - 333, in der US-5,230,549 und in der EP 0 467 112 B1 beschrieben. Die unterste Ebene eines derartigen, typischerweise modular aufgebauten Systems, bilden vier intelligente Radbrems-Module. Sie regeln ein gefordertes Radbremsmoment radindividuell ein und stellen für das Gesamtsystem sozusagen universelle intelligente Aktuatoren dar. Sie bestehen aus einem Microcontroller (Slave) für die Regelung, einem Servoverstärker und der eigentlichen elektromechanischen Radbremse. Diese unterste Ebene bildet das sogenannte Radbremsmanagement.

Die mittlere Ebene ist für das Bremsmanagement des Gesamtfahrzeuges zuständig, beispielsweise für eine situationsspezifische Verteilung der Bremskräfte auf die einzelnen Radbremsen. Die Hardware dieser mittleren Ebene des Fahrzeugbremsenmanagements besteht aus einem zentralen Rechner (Master), der typischerweise aus Gründen der Ausfallsicherheit durch einen zusätzlichen Rechner für die Systemkontrolle überwacht wird.

Die oberste Ebene eines derartigen Brake-by-wire-Systems stellt die Schnittstelle zum Fahrer dar. Sie besteht typischerweise aus der Nachbildung eines konventionellen Bremspedales mit redundant ausgeführter Sensorik zur Erfassung des Fahrer-Bremswunsches und zusätzlichen Überwachungselementen, die verschiedene Fehlerzustände dieses sogenannten Pedalmoduls anzeigen können. In dem Pedalmodul erfolgt auch eine Vorverarbeitung der Sensorsignale. Auch dieses Pedalmodul kann einen eigenen Microcontroller aufweisen.

Die einzelnen Ebenen werden durch definierte logische Schnittstellen und typischerweise über ein echtzeitfähiges Bussystem, das vorzugsweise redundant ausgeführt ist, datenmäßig miteinander verbunden und gewährleisten daher eine optimale Modularität des Systems.

Beide Bussysteme (bzw. ggf. auch nur ein Bussystem) können auch durch normale analoge Leitungen ersetzt werden.

Als weitere zentrale Komponente eines modular aufgebauten Bremssystems ist das Powermanagement, die Energieversorgung, zu nennen.

Das Brake-by-Wire-System stellt ein sicherheitskritisches verteiltes Echtzeitsystem dar, an das hohe Anforderungen bezüglich der Fehlererkennung und Fehlerbehandlung gestellt werden.

Da der Fahrer keinen direkten Durchgriff auf die Bremse hat, muß das Bremssystem in jedem Fehlerfall mindestens eine Notfunktion aufrechterhalten, was in bekannter Weise durch eine fehler-aktive, funktionelle Redundanz gewährleistet wird. Weiterhin sollen die Systeme in bekannter Weise eine leistungsfähige On-Line-Diagnose besitzen, die auftretende Fehler auf jeden Fall erkennt, damit eine entsprechende Notfunktion aktiviert und der Fahrer gewarnt werden kann.

Diese Forderungen haben entscheidende Auswirkungen auf die Gestaltung der Energieversorgung, der zentralen Bremsregelung und auch der Warnstrategie des elektronischen Bremssystems.

Die Ausfallsicherheit der Energieversorgung wird in bekannter Weise (durch vorgenannte DE-Z) durch Einführung eines Tandembordnetzes gewährleistet. Bei Ausfall eines Teilsystems bleibt die Funktionsfähigkeit der im ausgefallenen Kreis gespeisten Komponenten bedingt erhalten.

Für einen sicheren Betrieb des Fahrzeugbremsenmanagements (Regel- und Kontrollfunktionen) muß ein auftretender Fehler sowohl registriert als auch dessen Quelle erkannt werden. Deshalb ist daher gemäß einer bekannten Strategie in jedem Falle eine überwachende Einrichtung in dieser Ebene erforderlich. Das Hinzuziehen von Plausibilitätskriterien und geeigneten kontinuierlich ablaufenden Prüfroutinen innerhalb der Software stellen Maßnahmen dar, mit deren Hilfe Fehlerzustände lokalisiert und entsprechende Notfunktionen aktiviert werden.

So ist es aus der zitierten DE-Z bekannt, die Überprüfung der Rechner des Systems (Master und Slaves) mit Hilfe eines Kontrollrechners durchzuführen. Dabei werden sämtliche Rechner mit den wichtigsten Daten (Fahrerbremswunsch, Fahrgeschwindigkeit, Bremsmomente, etc.) versorgt und können durch Plausibilitätsbetrachtungen die Berechnungen der anderen Rechner überprüfen.

Bei Fehlfunktion des Masters oder des Kontrollrechners können die Slaves dies diagnostizieren und auf eine Notfunktion der Bremsanlage ohne Beteiligung des Masters umschalten.

Fehlfunktionen eines Slaves können vom Master und Kontrollrechner erkannt werden. Der Slave kann dann stillgelegt werden und die Notfunktion der restlichen Radbremsen wird nicht beeinträchtigt.

Durch die DE 195 10 525 A1 sind ferner Maßnahmen bekannt geworden, die die vorg. elektronischen Bremsanlagen mit Blick auf mögliche Fehlerzustände im Bereich der Bremswunscherfassung verbessern. Fehlersignale werden dabei über das Fahrzeugbremsenmanagement dem Radbremsenmanagement mitgeteilt, das radindividuelle Maßnahmen veranlaßt.

Schließlich ist aus der US-A-5,707,117 ein in drei Diagnoseebenen hierarchisch organisiertes Diagnosesystem für ein elektronisches Bremssystem bekannt, bei dem in einer ersten Diagnoseebene zunächst eine lokale Diagnose der einzelnen Systemkomponenten durchgeführt wird, in einer zweiten Diagnoseebene die Systemkomponenten miteinander sowie mit Fahrzeugbetriebszuständen korreliert werden und in einer dritten Diagnoseebene die Leistung des Bremssystems analysiert wird. Eine nicht zufriedenstellende Leistung zeigt einen Fehlerzustand an. Der Betrieb des fehlerhaften Systems kann so lange unterbrochen werden, bis eine besondere Fehlerbedingung identifiziert und in der ersten Diagnoseebene erkannt wird.

Die vorgenannten bekannten Maßnahmen gewährleisten jedoch noch kein umfassendes optimiertes Sicherheitskonzept.

Für ein umfassendes Sicherheitskonzept in dem entsprechenden Fehlerbehandlungs-System ist es notwendig, sämtliche Fehler des elektronischen Bremssystem zu erfassen und ihre Auswirkungen auf die jeweiligen Fahrsituationen zu berücksichtigen. Bei Anwendung der bekannten Konzepte würde dies dazu führen, eine Vielzahl von verschiedenen Zuständen des Bremssystems in die Sicherheitsbetrachtungen einschließen zu müssen, wodurch das System sehr komplex würde. Je komplexer jedoch das System aufgebaut ist, desto anfälliger wird es für Fehler, die dann zu Ausfällen von Komponenten des elektronischen Bremssystems führen können. Auch wird es schwierig, eine Rekonfiguration des Bremssystems nach Auftreten eines Fehlers vorzunehmen.

Ferner ist im bekannten Fall keine systematische Strategie in der Behandlung der Zustände beim Auftreten von Mehrfachfehlern gegeben.

Der Erfindung liegt die Aufgabe zugrunde, das eingangs bezeichnete Verfahren so zu führen bzw. die Vorrichtung so auszubauen, daß die Anzahl der verschiedenen Zustände des elektronischen Bremssystems, in denen sich das System bei der Fehlererfassung und -behandlung befindet, so klein wie möglich gehalten werden kann und die Zustände dabei genau definiert sind.

Die Lösung dieser Aufgabe gelingt gemäß der Erfindung mit dem Verfahren zur Behandlung von Fehlern in einem modular aufgebauten, aus mehreren intelligenten Modulen bestehenden elektronischen Bremssystem mit den Schritten:
- Festlegen und Definieren einer kleinen Anzahl von eindeutigen technischen Betriebszuständen des Bremssystems mit Vorgabe von bestimmten, definierten technischen Ereignissen, die allein einen Übergang von einem Betriebszustand in den nächsten Zustand bewirken,
- Verknüpfen der technischen Betriebszustände mit zustandsspezifischen Steuer-/Regelmaßnahmen sowie Warnmaßnahmen für den Fahrer des Fahrzeuges,
- Erfassen von Fehlern im Bremssystem beim Start des Fahrzeuges durch einen Pre-Drive-Check und on-line beim Betrieb des Fahrzeuges und Durchführen einer fehlerzustandsabhängigen Fehlerbehandlung entsprechend den Betriebszuständen,
- Festlegen und Definieren einer kleinen Anzahl von eindeutigen technischen Betriebszuständen für jedes der Module mit Vorgabe von bestimmten, definierten technischen Ereignissen, die allein einen Übergang von einem Betriebszustand des Moduls in den nächsten Betriebszustand bewirken,
- Verknüpfen der technischen Betriebszustände des Moduls mit zustandsspezifischen Steuer-/Regel-/Melde- bzw. Warnmaßnahmen, und
- Erfassen von Fehlern in dem Modul beim Start des Fahrzeuges durch einen Pre-Drive-Check und on-line beim Betrieb des Fahrzeuges und Durchführen einer fehlerzustandsabhängigen Fehlerbehandlung entsprechend den Betriebszuständen des Moduls.

Hinsichtlich der Vorrichtung wird die Aufgabe durch eine Vorrichtung zur Behandlung von Fehlern in einem modular aufgebauten, aus mehreren intelligenten Modulen bestehenden elektronischen Bremssystem für Fahrzeuge gelöst, das mindestens einen Zentralrechner zur Ansteuerung der Radbremsen abhängig von dem Bremswunsch des Fahrers und dem Betriebszustand des Bremssystems aufweist, der so organisiert ist, daß
- eine kleine Anzahl von eindeutigen technischen Betriebszuständen des Bremssystems festgelegt und definiert ist, mit Vorgabe von bestimmten technischen Ereignissen, die allein einen Übergang von einem Betriebszustand in den nächsten Zustand bewirken,
- er die technischen Betriebszustände zustandsspezifisch mit Steuer-/Regel-/ bzw. Warneinrichtungen für den Fahrer verbindet,
- eine Pre-Drive-Check-Routine zur Erfassung von Fehlern im Bremssystem beim Start des Fahrzeuges und on-line beim Betrieb des Fahrzeuges aufweist, die eine fehlerzustandsabhängige Fehlerbehandlung entsprechend den Betriebszuständen des Bremssystems durchführt,
- er einen Fehlerbehandlungscode für die Fehlerbearbeitung aufweist, wobei neben dem Zentralrechner an den Modulen autarke Unterrechner mit jeweils einem Fehlerbehandlungscode vorgesehen sind, die so organisiert sind, daß
- eine kleine Anzahl von eindeutigen technischen Betriebszuständen des jeweiligen Moduls festgelegt und definiert ist, mit Vorgabe von bestimmten technischen Ereignissen, die allein einen Übergang von einem Betriebszustand des Moduls in den nächsten Betriebszustand bewirken,
- sie die technischen Betriebszustände des jeweiligen Moduls zustandsspezifisch mit Steuer-/Regel-/ bzw. Warneinrichtungen für den Fahrer verbinden, und
- der Fehlerbehandlungscode eine Pre-Drive-Check-Routine zur Erfassung von Fehlern im Bremssystem beim Start des Fahrzeuges und on-line beim Betrieb des Fahrzeuges aufweist und entsprechend den Betriebszuständen der Module eine fehlerzustandsabhängige Fehlerbehandlung durchführt.

Durch die erfindungsgemäßen Maßnahmen befindet sich das modular aufgebaute elektronische Bremssystem bei Auftreten eines oder mehrerer Fehler immer in einem genau definierten Zustand. Die Anzahl der verschiedenen Zustände ist dabei sehr klein, wodurch das System mit Vorteil nicht zu komplex wird und daher maßgebend weniger für Fehler anfällig wird, die zu Ausfällen von Systemkomponenten führen könnten. Durch die erfindungsgemäßen Maßnahmen ist daher immer genau bekannt, in welchem definierten Zustand sich das System gerade befindet. Dadurch ist es ohne weiteres möglich, eine Rekonfiguration des Bremssystems nach Auftreten eines Fehlers vorzunehmen.

Vorzugsweise werden auch unbenutzte Speicherplätze bei den Rechnern RAMs, ROMS, usw. auf einen definierten Wert gesetzt, damit man auch insoweit zu jeder Zeit weiß, in welchem Zustand sich das System, auch sein Speicherbereich,. befindet.

Bei der Erfindung erfolgt ferner der Übergang von einem definierten Zustand in den nächsten definierten Zustand nur durch Eintreten ganz bestimmter definierter Ereignisse, was sich ebenfalls entscheidend auf die Fehlersicherheit des Systems auswirkt.

Das erfindungsgemäße Verfahren mit den definierten Systemzuständen und den definierten Übergängen kann sowohl (vorzugsweise) für elektromechanische Bremsanlagen, aber auch generell für elektronisch unterstützte Bremssysteme verwendet werden.

Die Erfindung gewährleistet somit eine fehlerzustandsabhängige Fehlerbehandlung in einem Brake-by-Wire-System.

Durch diese Weiterbildung der Erfindung wird somit an den betreffenden Modulen eine Eigendiagnose, sozusagen eine modulinterne Fehlerdiagnose, durchgeführt, was den Zentralrechner des Bremssystems wesentlich entlastet.

Weitere Merkmale und Vorteile der Erfindung ergeben sich anhand von in den Zeichnungen dargestellten Ausführungsbeispielen.

### Es zeigen:

- Figur 1: ein grundlegendes Zustandsdiagramm für ein Brake-by-Wire-System mit definierten Übergängen,
- Figur 2: das Zustandsdiagramm des Brake-by-Wire-Systems mit definierten Übergängen für das gesamte Bremssystem,
- Figur 3: das Zustandsdiagramm des Bremspedalmoduls mit definierten Übergängen,
- Figur 4: das Zustandsdiagramm jeweils eines Radmoduls mit definierten Übergängen, und
- Figur 5: das Zustandsdiagramm der Energieversorgung mit definierten Übergängen.

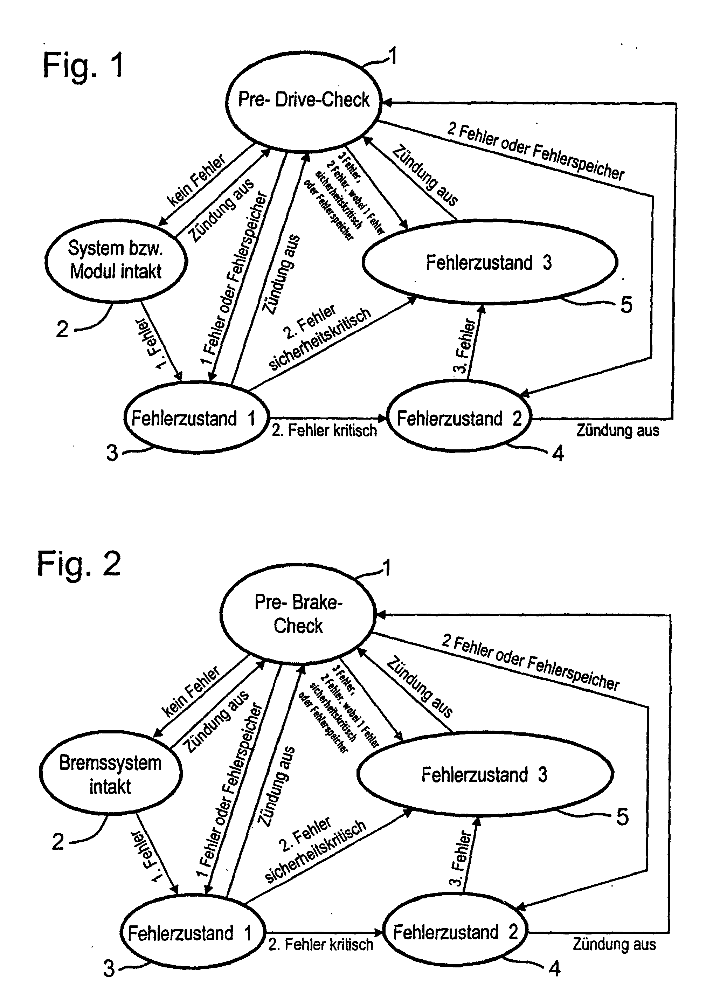

Die Figur 1 zeigt das erfindungsgemäße Zustandsdiagramm für ein Brake-by-Wire-System mit ganz definierten, wenigen technischen Systemzuständen und mit definierten technischen Übergängen zwischen den einzelnen Systemzuständen.

Das Zustandsdiagramm nach Figur 1 gilt dabei sowohl für das Gesamtsystem als auch für entsprechende Unter-Systeme der einzelnen Module des Brake-by-Wire-Systems, wenn dieses gemäß einer bevorzugten Ausführungsform so aufgebaut ist, daß jedes Modul mit einem eigenen Untersystem ausgerüstet ist, das eine Intelligenz aufweist, um autark auch die Fehler in dem zugehörigen Modul zu erfassen und darzustellen. Dadurch wird die zentrale Fehlerbehandlung entlastet und braucht sozusagen nicht den einzelnen Fehler in den Modulen "hinterherzugehen". Sie erhält vielmehr von dem autarken Unter-System vollständige Statusmeldungen über den Fehlerzustand des betreffenden Moduls. Die Fehler in den einzelnen Modulen werden dabei mit bekannten Methoden on-line erfaßt.

Für das betrachtete Gesamtsystem, sowie die das Gesamtsystem darstellende Unter-Systeme der Module sieht die Erfindung vorzugsweise folgende, maximal fünf Zustände, die in Figur 1 mit entsprechenden Bezugszeichen versehen sind, vor:
1. Pre-Drive-System-Check (PSC) bzw. Pre-Drive-Module-Check (PMC),
2. Bremssystem intakt,
3. Fehlerzustand 1,
4. Fehlerzustand 2 und
5. Fehlerzustand 3.

Die Übergänge zwischen den Zuständen 1 bis 5 sind mit den Pfeilen gekennzeichnet. Das Eintreten eines Übergangs erfolgt nur, wenn die Ereignisse an den Übergängen eintreten, wie sie an den Pfeilen in Figur 1 beschrieben sind.

Der Pre-Drive-System-Check bzw. die Pre-Drive-Module-Checks gemäß Zustand 1 beinhalten Testroutinen mittels eines Error-Handling Codes in den jeweiligen System-Rechnern, die beim Starten des Fahrzeuges (Zündung an) oder beim Betätigen des Bremspedals (Bremslichtschalter) erfolgen. Nach einer Diagnose entscheidet der Check, ob das Bremssystem und die einzelnen Module intakt sind, oder ob ein bestimmter Fehlerzustand vorhanden ist. Entsprechend dieser Diagnose gehen die Module bzw. das gesamte Bremssystem gleich in den entsprechenden Zustand 2 oder 3, 4, 5 über. Dieser Pre-Drive-Check ist besonders bei einer Bremsanlage vom Brakeby-Wire-Typ sinnvoll, da es sich hierbei um eine Fremdkraftbremsanlage ohne mechanische Rückfallebene handelt. Bei einem rein hydraulischen Bremssystem ist eine aktive Überwachung und Diagnose nicht ohne weiteres zu realisieren.

Bei dem Pre-Drive-System-Check können beispielsweise durch einen Error Handling Code im Zentralrechner alle Bremsen kurz angesteuert und überprüft werden, ob alle Sensorsignale und entsprechende Statusmeldungen vorhanden sind. Als Alternative werden vor allem Module des Bremssystems und evt. von der Energieversorgung die Ergebnisse der individuellen Pre-Drive-Module-Checks abgefragt bzw. empfangen. Diese Funktionalität kann vorzugsweise im Zentralrechner implementiert werden. Je nach dem Zustand des gesamten Bremssystem hat der Zentalrechner sofort die Möglichkeit entsprechende Maßnahmen zu ergreifen. Bei Ausfall eines Radmoduls kann die Bremskraft z.B. sofort neu auf die noch intakten Module verteilt werden. Insgesamt kann die Funktionalität des Bremssystems entsprechend seinem aktuellen Zustand konfiguriert werden.

Da die restlichen Module ebenfalls im bevorzugten Fall mindestens einen Rechner besitzen, läuft auf diesen Modulrechnern jeweils ein separater Error Handling Code. Die gesamte Koordination dieser verschiedenen Error Handling Codes erfolgt vorzugsweise durch den Zentralrechner bzw. in dem Modul, in dem auch der Error Handling Code nach Figur 1 abläuft. Als bevorzugte Ausführung hat jedes Modul einen eigenen Pre-Drive-Modul-Check. Mit dieser jeweils separaten Modul-Testroutine wird beim Starten des Fahrzeuges (Zündung an) oder beim Betätigen des Bremspedals (Bremslichtschalter) die Funktionsfähigkeit und der Zustand des Moduls überprüft.

Falls ein Modul keinen eigenen Rechner bzw. Elektronik hat, der den Pre-Drive-Modul-Check durchführen kann, so kann diese Testroutine von einem anderen Modul übernommen werden.

Befindet sich das Bremssystem in einem Fehlerzustand, so wird dieser Zustand in einem Fehlerspeicher abgespeichert, so daß das System beim nächsten Pre-Brake-Check sofort wieder in diesen Zustand übergeht, sofern nicht noch ein neuer Fehler aufgetreten ist, der dann das Bremssystem in einen anderen Fehlerzustand übergehen läßt. Der Zustand "Bremssystem intakt" wird dadurch nach Auftreten eines Fehlers beispielsweise erst dann wieder eingenommen, wenn das Bremssystem repariert worden ist.

Als Option bei dem Pre-Drive-System-Check bzw. dem Pre-Drive-Module-Checks kann eine Reset-Funktion für den Fehlerspeicher hinzugefügt werden. Falls während des Betriebs des Bremssystems ein Fehler aufgetreten ist, so wird dieser zunächst in dem Fehlerspeicher abgespeichert, der entweder zentral oder ebenfalls modular in den einzelnen Modulen realisiert werden kann. Beim nächsten Start des Fahrzeuges (Zündung an) wird der (oder die) Fehlerspeicher ausgelesen. Beinhaltet ein Fehlerspeicher den Fehlerzustand 2 bzw. Fehlerzustand 3 (Systemzustand 4 oder 5), so wird zunächst dieser abgespeicherte Fehlerzustand nach den Checks eingenommen. Liegt im Fehlerspeicher der Fehlerzustand 2 vor und kommt ein weiterer Fehler bei den Pre-Drive-Checks hinzu, wird Fehlerzustand 3 eingenommen. Hingegen kann bei abgespeichertem Fehlerzustand 1 (Systemzustand 3) die Reset-Funktion eingeführt werden. Das heißt, daß der Fehlerspeicher bei Fehlerzustand 1 gelöscht werden kann, wenn bei den Pre-Drive-Checks kein Fehler aufgetreten ist. Falls der Fehlerzustand 1 die Ansteuerung einer zugehörigen Warnlampe beinhaltet, so besteht hier die Möglichkeit, diese Warnlampe nicht unnötig lang anzusteuern.

Als Erweiterung des Fehlerspeichers kann die Anzahl des aufgetretenen 1. Fehlers mitgezählt werden. Wenn eine gewisse, vorher definierte Mindestzahl dieser aufgetretenen Fälle (1. Fehler während dem Betrieb und Reset bei den Pre-Drive-Checks) vorliegt, so kann die zugehörige Warnlampe angesteuert bleiben.

Die Fehlerzustände nach Figur 1 sind vorzugsweise mit einer festgelegten gestuften Warnstrategie verknüpft, d.h. mit Warnstufen, die beim Erkennen verschiedener Fehler in dem elektronischen Bremssystem greifen sollten, d.h. mit einer bestimmten Ansteuerung verknüpft sind. In einem elektronischen Bremssystem können Fehler unterschiedlicher Kritikalität entstehen. Bei einem sich anbahnenden Totalausfall muß beispielsweise der Fahrer "gezwungen werden", das Fahrzeug mit geringer Geschwindigkeit, z.B. 30 km/h, aus dem Gefahrenbereich zu bringen und das Fahrzeug mit der Feststellbremse sicher abzustellen.

Es kennzeichnet der Fehlerzustand 1 (Systemzustand 3) das Auftreten eines Fehlers, der nicht kritisch ist, weil er keinen wesentlichen Einfluß auf das Grund-Fahrverhalten hat und volle Grund-Bremssystemfunktion gewährleistet; ein Beispiel dafür ist der Ausfall des ABS-Systems.

Diesem Fehlerzustand 1 kann ein spezifischer, für den Fahrer bestimmtes Signal, zugeordnet werden, beispielsweise eine gelbe Warnlampe.

Der Fehlerzustand 2 (Systemzustand 4) kennzeichnet das Auftreten eines kritischen Fehlers, der einen, wenn auch noch beherrschbaren, Einfluß auf die Fahrdynamik hat. Beispiel: Ausfall eines Kreises (Batterie) bzw. einer Bremse. Diesem Fehlerzustand wird ebenfalls ein spezifisches Signal zugeordnet, beispielsweise eine rote Warnlampe.

Der Fehlerzustand 3 (Systemzustand 3) kennzeichnet das Auftreten eines überkritischen Fehlers, der Einfluß auf die Grundbremsfunktion hat, z.B. verringerte Leistungsfähigkeit der Radbremse wegen geringem Spannkraftniveau bzw. eines äußerst kritischen Fehlers, der auf einen baldigen Totalausfall der Bremsanlage hindeutet. Beispiel: Ausfall beider Batterien. Diesem Fehlerzustand wird ebenfalls ein spezifisches Signal zugeordnet, beispielsweise die rote Warnlampe gemäß dem Fehlerzustand 2 in Verbindung mit der Erzeugung eines akkustischen Warnsignals und/oder Reduzierung der maximalen Geschwindigkeit des Fahrzeuges auf einen fest eingestellten wert, z.B. 50 km/h. Diese Geschwindigkeitsbegrenzung kann über eine Ansteuerung des E-Gas (bzw. Eingriff ins Motormanagement) erfolgen. Ferner ist es denkbar, daß eine Zeitmessung mit verwendet wird. Je länger das System nicht repariert wird, desto mehr wird die maximale Geschwindigkeit reduziert. Im einfachsten Fall kann Fehlerzustand 2 mit Fehlerzustand 3 gleichgesetzt werden und z.B. nur die rote Warnlampe ange-steuert werden, was allerdings für die Warnlampenstrategie dem heutigen Stand der Technik entsprechen würde.

Es wurde bereits dargestellt, daß zweckmäßig jeder Modul ein eigenes Rechnersystem besitzt, in dem jeweils eine zugeordnete Fehlerroutine implementiert ist. Die Zustandsdiagramme der einzelnen Module sind gleichartig zu dem des Systems nach Figur 1 in den Figuren 2 bis 6 dargestellt und zeigen die einzelnen Zustände und die zugehörigen Übergänge.

Die Figur 2 zeigt das Zustandsdiagramm für das gesamte Bremssystem. Der Pre-Braking-Check des Zustandes kann hier mit dem Pre-System-Check des Zustandes 1 in Figur 1 gleichgesetzt werden. Die verschiedenen Zustände und Übergänge in Figur 2, die denen der Figur 1 entsprechen, werden vorzugsweise im Zentralrechner des elektronischen Bremssystems implementiert. Diese Funktionalität wird als "Error-Handling Code Zentral-rechner" bezeichnet.

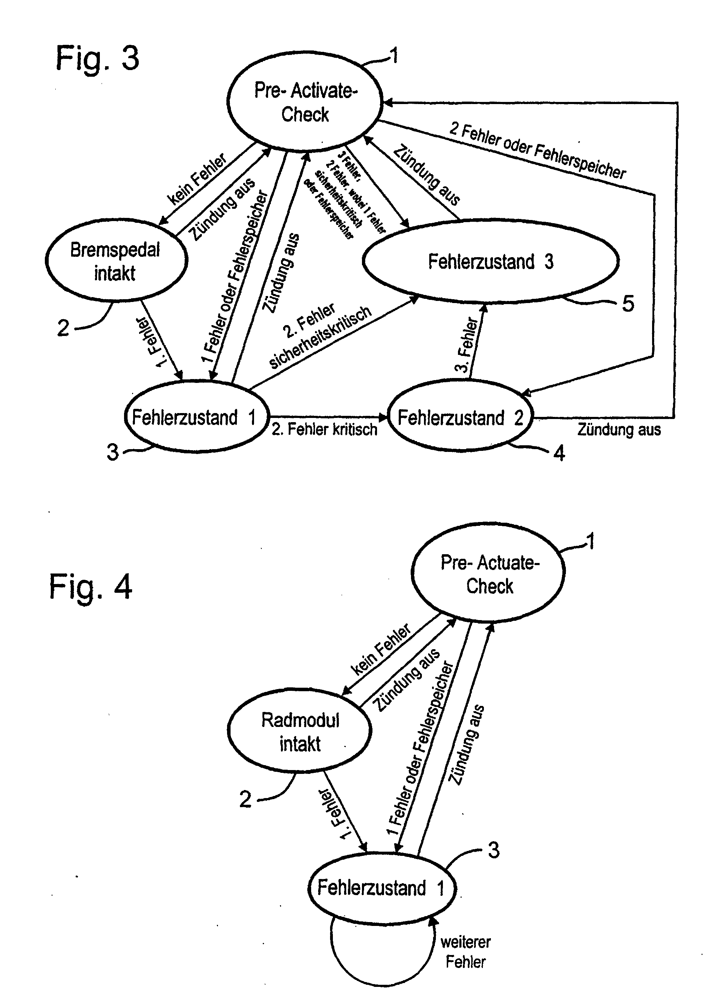

Das Zustandsdiagramm für den Bremspedalmodul ist in Figur 3 dargestellt.

Bei dem Bremspedalmodul beinhaltet der Pre-Pedal-Check des Zustandes 1 mindestens eine Überprüfung der Pedalsensorik und soweit möglich, einen Funktionstest der Auswerteelektronik für die Fahrerwunschgenerierung der Pedal-Elektronik und den Busanschlüssen.

Im übrigen entspricht das Zustandsdiagramm demjenigen nach Figur 1.

Das zustandsdiagramm für jedes Radmodul ist in Figur 4 dargestellt. Jedes Radmodul überprüft bei seinem eigenen Pre-Radmodul-Check (Zustand 1), ob z.B. im Fall einer elektronischen Bremse der Elektromotor angesteuert werden kann, die Bremsbeläge bewegt werden können und die Radmodulsensorik eine plausible Reaktion auf die Anregungen des Pre-Modul-Checks geben. Prinzipiell wird die Elektronik, Mechanik und Sensorik des Radmoduls so umfangreich wie möglich auf die Funktions-tüchtigkeit hin überprüft werden. Das Zustandsdiagramm für das Radmodul enthält, wie die Figur 4 erkennen läßt, nicht den Fehlerzustand 2 und den Fehlerzustand 3, da auch bei Auftreten von mindestens zwei Fehlern innerhalb eines Radmoduls nur die gelbe Warnlampe angesteuert wird, wenn kein weiterer Fehler innerhalb des gesamten Bremssystems auftritt.

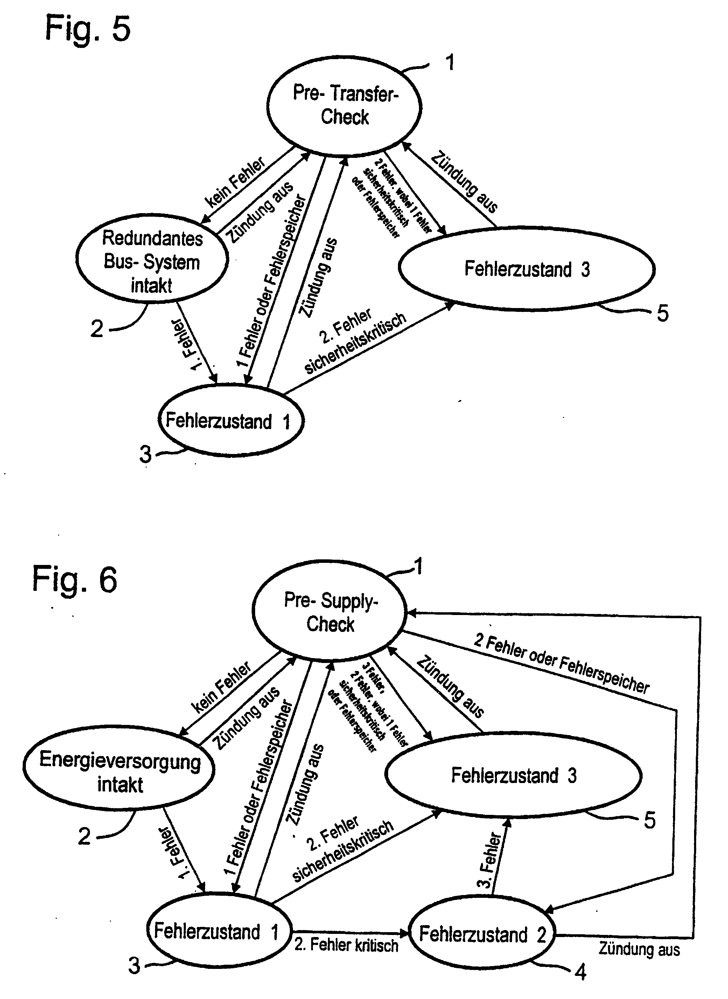

Das Zustandsdiagramm für das Bussystem ist in Figur 5 dargestellt.

Beim Bussystem wird als eine bevorzugte Ausführungform davon ausgegangen, daß das Bussystem redundant aufgebaut ist und zwei Bussysteme beinhaltet. Bei Ausfall eines Bussystems würde der Ausfall des zweiten Bussystems zu einem Totalausfall des gesamten Bremssystems führen. Deshalb muß dann sofort in den Fehlerzustand 1 (Zustand 3) übergegangen werden.

Der Zustand 4 entfällt daher bei der Fehlerstrategie für das Bussystem.

Der Pre-Bus-Check (Zustand 1) beinhaltet im wesentlichen eine Überprüfung, ob über das redundante Bussystem alle Teilnehmer angesprochen werden können und diese ein "Lebenszeichen" in Form einer Antwortnachricht geben.

Dieser Pre-Bus-Check kann auch von einem anderen Modul durchgeführt werden. d.h. es wird dann kein eigener Mikrocontroller für das Bussystem benötigt.

Das Zustandsdiagramm für die Energieversorgung des Bremssystems gemäß Figur 6 nimmt eine gesonderte Stellung ein, da die Energieversorgung Bestandteil des Bremssystems ist. Eine redundant aufgebaute Energieversorgung kann beispielsweise im Fahrzeug generell den elektrische Fahrzeugaggregaten und somit auch dem Bremssystem zur Verfügung stehen. Das heißt, die Schnittstelle zwischen der Energieversorgung und dem Bremssystem kann beispielsweise durch zwei separate Versorgungsleitungen realisiert sein. Der Pre-Power-Check (Zustand 1 in Figur 6) könnte sich dann beispielsweise auf eine Überprüfung der für das Bremssystem notwendigen Batterie-spannungsversorgung beschränken. In einer erweiterten Form werden zusätzlich die Ladezustände der Batterien überprüft, ob diese noch ausreichend für das Bremssystem sind.

Eine bevorzugte Realisierungsform der Energieversorgung hat nach Auftreten eines ersten Fehlers (z.B. Ausfall des Generators) den Übergang in Fehlerzustand 1 (Zustand 3) und Ansteuerung der gelben Warnlampe zur Folge. In diesem Zustand muß der Batterieladezustand beider Batterien ständig überwacht werden, wenn ein gewisser Mindestenergiegehalt einer Batterie unterschritten wird, ist in den Fehlerzustand 3 zu wechseln.

Die in den Figuren 2 bis 6 dargestellten Zustandsdiagramme sind bevorzugte Ausführungsbeispiele.

Prinzipiell kann ein einziges Modul die Funktionalität und Koordination aller Module übernehmen. Dann ist dieses Modul vorzugsweise fehlertolerant aufgebaut, damit eine Mehrheitsentscheidung im Fehlerfall möglich ist. Somit können in einer vereinfachten Ausführungsform alle Pre-Module-Checks und der Pre-System-Check in einem einzigen Modul erfolgen, beispielsweise dem des Zentralrechner. Fehlertolerant heißt, daß bei Auftreten eines Einfachfehlers in einem redundanten System der fehlerhafte Zweig durch eine Mehrheits-Entscheidungs-Logik erkannt wird, so daß der weiterhin funktionsfähige Zweig die Systemfähigkeit aufrechterhält, wodurch der erkannte Einfachfehler "toleriert" werden kann.

Für die Koordination der Übergänge zwischen den einzelnen Zuständen gibt es folgende bevorzugte Ausführungsform:
Jedes Modul macht seine eigene Koordination. Mindestens ein Modul macht die Koordinatöion für das gesamte System.

Die Ansteuerung der Warneinrichtungen kann auf folgende Arten erfolgen:
1. Ein fehlertolerantes Modul übernimmt diese Aufgabe, das heißt, auch bei Eintreten eines Fehlers innerhalb des fehlertoleranten Moduls ist das Modul selbst weiterhin in der Lage, die Warnlampen anzusteuern und, falls vorhanden, ebenso die akkustischen Warneinrichtung und Geschwindig-keitsbeschränkung.
2. Mindestens zwei Module, die nicht fehlertolerant aufgebaut sein müssen, steuern die Warneinrichtungen an. Bei Ausfall eines dieser Module kann das andere Modul die Aufgabe der Ansteuerung der Warneinrichtungen übernehmen.
3. Die Warneinrichtungen besitzen eine eigene Einrichtung, beispielsweise in Form einer elektronischen Auswerteelektronik, die feststellen kann, welche Module des Systems ausgefallen sind. Dadurch können sich die Warneinrichtungen selbst ansteuern.
4. Alle Module haben die Funktionalität, die Warnlampen anzusteuern und kennen den Zustand der Warneinrichtungen und der anderen Module. Das heißt, daß alle Module den Zustand des Bremssystems kennen.
   Die Ansteuerung der Warneinrichtungen erfolgt dann durch eine ODER-Verknüpfung. Das heißt, beispielsweise nach. Ansteurung der gelben Warnlampe kann ein beliebig anderes Modul des Bremssystems bei einem weiteren (Modul-)Ausfall die rote Warnlampe ansteuern.
   Eine mögliche Inkonsistenz bzgl. der Ausfallschwere und dementsprechend bei der Ansteuerung der Warnlampen wird dabei bewußt in Kauf genommen. Beispielsweise ergeben zwei Radmodul-Ausfälle die Ansteuerung der roten Warnlampe, hingegen kann bei Verlust einer Energieversorgung (ein Ausfall) ein Kreis (zwei Radmodule) als Folgeerscheinung ausfallen. Dies wird prinzipiell mit einer gelben Warnlampe bewertet werden. Hier soll auf jeden Fall ein zweiter unabhängig auftretender Fehler höher bewertet werden, als ein Einfachfehler, auch wenn es dadurch zu einer höheren Funktionsdegradation kommt, um das System nicht unnötig komplex und dadurch möglicherweise insgesamt fehleranfälliger werden zu lassen.

## Patentansprüche

1. Verfahren zur Behandlung von Fehlern in einem modular aufgebauten, aus mehreren intelligenten Modulen bestehenden elektronischen Bremssystem von Fahrzeugen, mit den Schritten:
- Festlegen und Definieren einer kleinen Anzahl von eindeutigen technischen Betriebszuständen des Bremssystems mit Vorgabe von bestimmten, definierten technischen Ereignissen, die allein einen Übergang von einem Betriebszustand in den nächsten Zustand bewirken,
- Verknüpfen der technischen Betriebszustände mit zustandsspezifischen Steuer-/Regelmaßnahmen sowie Warnmaßnahmen für den Fahrer des Fahrzeuges,
- Erfassen von Fehlern im Bremssystem beim Start des Fahrzeuges durch einen Pre-Check und on-line beim Betrieb des Fahrzeuges und Durchführen einer fehlerzustandsabhängigen Fehlerbehandlung entsprechend den Betriebszustanden,
- Festlegen und Definieren einer kleinen Anzahl von eindeutigen technischen Betriebszuständen für jedes der Module mit Vorgabe von bestimmten, definierten technischen Ereignissen, die allein einen Übergang von einem Betriebszustand des Moduls in den nächsten Betriebszustand bewirken,
- Verknüpfen der technischen Betriebszustände des Moduls mit zustandsspezifischen Steuer-/Regel-/Melde- bzw. Warnmaßnahmen, und
- Erfassen von Fehlern in dem Modul beim Start des Fahrzeuges durch einen Pre-Check und on-line beim Betrieb des Fahrzeuges und Durchführen einer fehlerzustandsabhängigen Fehlerbehandlung entsprechend den Betriebszuständen des Moduls.

2. Verfahren nach Anspruch 1, **dadurch gekennzeichnet, daß** fünf technische Betriebszustände des Systems oder des Modules festgelegt sind, mit den Zuständen
- Pre-Check
- System oder Modul intakt
- Fehlerzustand 1
- Fehlerzustand 2
- Fehlerzustand 3,
wobei die Zahl der Fehlerzustände modulabhängig veränderbar ist.

3. Verfahren nach Anspruch 2, **dadurch gekennzeichnet, daß** dem Fehlerzustand 1 ein unkritischer Fehler, dem Fehlerzustand 2 ein kritischer Fehler und dem Fehlerzustand 3 ein sicherheitskritischer Fehler, mit entsprechend spezifischen Steuer-/Regel-/Warnmaßnahmen zugeordnet ist.

4. Verfahren nach einem der Ansprüche 1 bis 3, **dadurch gekennzeichnet, daß** ein festgestellter Fehler nach dem Abstellen des Fahrzeuges gespeichert wird und die Fehlerbehandlung nach dem nächsten Pre-Check von dessen Ergebnis abhängig gemacht wird.

5. Verfahren nach einem der Ansprüche 1 bis 4, **dadurch gekennzeichnet, daß** die betriebszustandsspezifischen Steuer-/Regel-/Melde- sowie Warnmaßnahmen abhängig von der Zahl des Auftretens eines bestimmten Fehlers durchgeführt werden.

6. Verfahren nach einem der Ansprüche 1 bis 5, **dadurch gekennzeichnet, daß** die Steuermaßnahme in einer Geschwindigkeitsreduzierung besteht.

7. Verfahren nach Anspruch 6, **dadurch gekennzeichnet, daß** die Geschwindigkeitsreduzierung zeitgesteuert erfolgt.

8. Verfahren nach einem der Ansprüche 1 bis 7, **dadurch gekennzeichnet, daß** mindestens ein Modul von einem anderen Modul mit fehlerbehandelt wird, das vorzugsweise fehlertolerant aufgebaut ist.

9. Verfahren nach einem der Ansprüche 3 bis 8 mit einem Bremspedal-Modul, das über ein Bussystem oder Signalleitungen mit einem Zentralrechner des Systems verbunden ist, **dadurch gekennzeichnet, daß** der Pre-Check des Pedalmoduls die Überprüfung der Pedalsensorik, der Elektronik, der Leistungsversorugng und der Busanschlüsse bzw. Signalverbindungen umfaßt.

10. Vorrichtung zur Behandlung von Fehlern in einem elektronischen Bremssystem von Fahrzeugen, das mindestens einen Zentralrechner zur Ansteuerung der Radbremsen abhängig von dem Bremswunsch des Fahrers und dem Betriebszustand des Bremssystems aufweist, der so organisiert ist, daß
- eine kleine Anzahl von eindeutigen technischen Betriebszuständen des Bremssystems festgelegt und definiert ist, mit Vorgabe von bestimmten technischen Ereignissen, die allein einen Übergang von einem Betriebszustand in den nächsten Zustand bewirken,
- er die technischen Betriebszustände zustandsspezifisch mit Steuer-/Regel-/ bzw. Warneinrichtungen für den Fahrer verbindet,
- eine Pre-Check-Routine zur Erfassung von Fehlern im Bremssystem beim Start des Fahrzeuges und on-line beim Betrieb des Fahrzeuges eine fehlerzustandsabhängige Fehlerbehandlung entsprechend den Betriebszuständen des Bremssystems durchführt,
- er einen Fehlerbehandlungscode für die Fehlerbearbeitung aufweist, wobei neben dem Zentralrechner an den Modulen autarke Unterrechner mit jeweils einem Fehlerbehandlungscode vorgesehen sind, die so organisiert sind, daß
- eine kleine Anzahl von eindeutigen technischen Betriebszuständen des jeweiligen Moduls festgelegt und definiert ist, mit Vorgabe von bestimmten technischen Ereignissen, die allein einen Übergang von einem Betriebszustand des Moduls in den nächsten Betriebszustand bewirken,
- sie die technischen Betriebszustände des jeweiligen Moduls zustandsspezifisch mit Steuer-/Regel-/ bzw. Warneinrichtungen für den Fahrer verbinden, und
- der Fehlerbehandlungscode eine Pre-Check-Routine zur Erfassung von Fehlern im Bremssystem beim Start des Fahrzeuges und on-line beim Betrieb des Fahrzeuges aufweist und eine fehlerzustandsabhängige Fehlerbehandlung entsprechend den Betriebszuständen der Module durchführt.

11. Vorrichtung nach Anspruch 10, **dadurch gekennzeichnet, daß** der Rechner jeweils so organisiert ist, daß fünf technische Betriebszustände des Systems oder des Moduls festgelegt sind, mit den Zuständen
- Pre-Check
- System oder Modul intakt
- Fehlerzustand 1
- Fehlerzustand 2
- Fehlerzustand 3,
wobei die Zahl der Fehlerzustände modulabhängig veränderbar ist.

12. Vorrichtung nach einem der Ansprüche 10 oder 11, **dadurch gekennzeichnet, daß** auf die Kritikalität des Fehlers spezifisch abgestellte Warneinrichtungen vorgesehen sind.

13. Vorrichtung nach einem der Ansprüche 10 bis 12, **dadurch gekennzeichnet, daß** ein Fehlerspeicher vorgesehen ist.

14. Vorrichtung nach einem der Ansprüche 10 bis 13, **dadurch gekennzeichnet, daß** ein Fehlerzähler vorgesehen ist.

15. Vorrichtung nach Anspruch 11 oder einem der folgenden, **dadurch gekennzeichnet, daß** ein Unterrechner für mehrere Module vorgesehen und fehlertolerant aufgebaut ist.

## Claims

1. A method for handling errors in a modular-design electronic brake system of vehicles comprised of a number of intelligent modules, including the steps of:
- determining and defining a small number of unambiguous technological operating conditions of the brake system with predefinition of certain, defined technological events which alone effect a transition from one operating condition to the next condition;
- combining the technological operating conditions with condition-specific control/regulatory measures as well as with measures of warning to the driver of the vehicle,
- detecting errors in the brake system at the start of the vehicle by means of a pre-check and on-line during the operation of the vehicle, and implementing error-condition-responsive error handling in accordance with the operating conditions,
- determining and defining a small number of unambiguous technological operating conditions of the respective module with predefinition of certain, defined technological events which alone effect a transition from one operating condition of the module to the next operating condition,
- combining the technological operating conditions of the module with condition-specific control/regulatory/reporting and warning measures, respectively; and
- detecting errors in the respective module at the start of the vehicle by means of a pre-check and on-line during the operation of the vehicle, and implementing error-condition-responsive error handling in accordance with the operating conditions of the module.

2. A method as claimed in claim 1,
**characterized in that** five technological operating conditions of the system or of the module are determined, including the conditions:
pre-check
system or module intact
error condition 1
error condition 2
error condition 3,
with the number of error conditions being variable in dependence on the module.

3. A method as claimed in claim 2,
**characterized in that** there is assigned, with correspondingly specific control/regulatory/warning measures, an uncritical error to error condition 1, a critical error to error condition 2, and a safety-critical error to error condition 3.

4. A method as claimed in any of claims 1 through 3,
**characterized in that** a detected error is stored after the vehicle has been parked and **in that** error handling after the following pre-check is made dependent on the result of said pre-check.

5. A method as claimed in any of claims 1 through 4,
**characterized in that** the operating-condition-specific control/regulatory/reporting as well as warning measures are implemented in dependence on the number of appearances of a certain error.

6. A method as claimed in any of claims 1 through 5,
**characterized in** the control measure consists in a speed reduction.

7. A method as claimed in claim 6,
**characterized in that** the speed reduction takes place in a timed manner.

8. A method as claimed in any of claims 1 through 7,
**characterized in that**, with regard to at least one module, error handling is co-performed by another module preferably featuring an error-tolerant design.

9. A method as claimed in any of claims 3 through 8, with a brake pedal module connected with a central computing unit of the system by way of a bus system or signal lines,
**characterized in that** the pre-check of the pedal module comprises checking the pedal sensor system, the electronics, the power supply and the bus and signal connections, respectively.

10. A device for handling errors in an electronic brake system of vehicles which at least includes one central computing unit for actuating the wheel brakes in dependence on the driver's intention to brake and on the operating condition of the brake system, which computing unit is organized so that
- a small number of unambiguous technological operating conditions of the brake system is determined and defined, with a predefinition of defined technological events which alone effect a transition from one operating condition to the next condition,
- the computing unit combines the technological operating conditions condition-specifically with respectively control/regulatory and warning devices for the driver,
- a pre-check routine for detecting any errors in the brake system at the start of the vehicle and on-line during the operation of the vehicle implements error-condition-responsive error handling in accordance with the operating conditions of the brake system,
- the central computing unit includes an error handling code for handling errors, and there is provision of autonomous subcomputing units, as modules, provided with error handling codes besides the central computing unit, which are organized so that
- a small number of unambiguous technological operating conditions of the respective module is determined and defined, with a predefinition of defined technological events which alone effect a transition from one operating condition to the next condition,
- they combine the technological operating conditions of the respective module condition-specifically with respectively control/regulatory and warning devices for the driver, and
- the error handling code includes a pre-check routine for detecting any errors in the brake system at the start of the vehicle and on-line during the operation of the vehicle and implements error-condition-responsive error handling in accordance with the operating conditions of the modules.

11. A device as claimed in claim 10,
**characterized in that** the computing unit is organized each time so that five technological operating conditions of the system or of the module are determined, including the conditions
pre-check
system or module intact
error condition 1
error condition 2
error condition 3,
with the number of error conditions being variable in dependence on the module.

12. A device as claimed in any of claims 10 or 11,
**characterized in that** warning devices are provided which are specifically adapted to the criticality of the error.

13. A device as claimed in any of claims 10 through 12,
**characterized in that** an error memory is provided.

14. A device as claimed in any of claims 10 through 13,
**characterized in that** an error counter is provided.

15. A device as claimed in claim 11 or in any of the following claims,
**characterized in that** a subcomputing unit is provided for a plurality of modules and features an error-tolerant design.

## Revendications

1. Procédé de traitement de défauts dans un système électronique de freinage de véhicule, de construction modulaire, constitué de plusieurs modules intelligents, comportant les étapes suivantes :
- fixer et définir un petit nombre d'états techniques clairs de fonctionnement du système de freinage avec fixation d'événements techniques définis déterminée qui provoquent à eux seuls le passage d'un état de fonctionnement à l'état suivant,
- corréler les états de fonctionnement techniques à des moyens de commande/régulation spécifiques d'un état ainsi qu'à des moyens d'avertissement du conducteur du véhicule,
- détecter des défauts dans le système de freinage au démarrage du véhicule par un pré-contrôle et en ligne pendant le fonctionnement du véhicule, et mettre en oeuvre un traitement de défaut dépendant de l'état de défaut conformément aux états de fonctionnement,
- fixer et définir un petit nombre d'états de fonctionnement techniques clairs pour chacun des modules avec fixation d'événements techniques définis et déterminés qui provoquent à eux seuls un passage d'un état de fonctionnement du module à l'état de fonctionnement suivant,
- corréler les états de fonctionnement techniques du module à des moyens de commande/régulation/signalisation ou avertissement spécifiques de l'état, et
- détecter des défauts dans le module au démarrage du véhicule par un pré-contrôle et en ligne pendant le fonctionnement du véhicule et mettre en oeuvre un traitement de défaut dépendant de l'état de défaut conformément aux états de fonctionnement du module.

2. Procédé selon la revendication 1, **caractérisé en ce que** cinq états de fonctionnement techniques du système ou du module sont fixés avec les états suivants :
- pré-contrôle
- système ou module intact
- état de défaut 1
- état de défaut 2
- état de défaut 3, le nombre d'états de défaut étant variable en fonction du module.

3. Procédé selon la revendication 2, **caractérisé en ce qu'**à l'état de défaut 1 est affecté un défaut non critique, à l'état de défaut 2 un défaut critique et à l'état de défaut 3 un défaut critique pour la sécurité, avec des moyens spécifiques correspondants de commande/régulation/avertissement.

4. Procédé selon l'une des revendications 1 à 3, **caractérisé en ce qu'**un défaut constaté est mémorisé après l'arrêt du véhicule et le traitement de défaut après le pré-contrôle suivant est rendu dépendant de son résultat.

5. Procédé selon l'une des revendications 1 à 4, **caractérisé en ce que** les moyens de commande/régulation/signalisation ou avertissement spécifiques de l'état de fonctionnement sont déclenchés en fonction du nombre d'apparitions d'un défaut déterminé.

6. Procédé selon l'une des revendications 1 à 5, **caractérisé en ce que** le moyen de commande consiste en une réduction de la vitesse.

7. Procédé selon la revendication 6, **caractérisé en ce que** la réduction de la vitesse s'effectue de manière commandée dans le temps.

8. Procédé selon l'une des revendications 1 à 7, **caractérisé en ce qu'**au moins un module est soumis à un traitement de défaut de la part d'une autre module qui est construit de préférence de manière à tolérer un défaut.

9. Procédé selon l'une des revendications 3 à 8, comportant un module de pédale de frein qui est relié, par un système de bus ou de lignes de signaux, à un ordinateur central du système, **caractérisé en. ce que** le pré-contrôle du module de pédale comprend la vérification des capteurs de la pédale, de l'électronique, de l'alimentation en puissance et des bornes du bus ou des liaisons des signaux.

10. Dispositif de traitement de défaut dans un système électronique de freinage de véhicule, qui comporte au moins un ordinateur central pour commander les freins des roues en fonction de la volonté de freiner du conducteur et de l'état de fonctionnement du système de freinage, qui est organisé de manière que
- un petit nombre d'états de fonctionnement techniques clairs du système de freinage soit fixé et défini, avec fixation d'événements techniques déterminés qui provoquent à eux seuls un passage d'état de fonctionnement à l'état suivant,
- il relie les états de fonctionnement techniques à des dispositifs de commande/régulation/d'avertissement spécifiques de l'état, destinés au conducteur,
- une routine de pré-contrôle, pour détecter des défauts dans le système de freinage au démarrage du véhicule et en ligne pendant le fonctionnement du véhicule, exécute un traitement de défaut dépendant de l'état de défaut conformément aux états de fonctionnement du système de freinage,
- il comporte un code de traitement de défaut pour traiter les défauts, par lequel outre l'ordinateur central sont prévus sur les modules des sous-ordinateurs autonomes avec chacun un code de traitement de défaut, qui sont organisés de manière que
- un petit nombre d'états de fonctionnement techniques clairs du système de freinage soit fixé et défini, avec fixation d'événements techniques déterminés qui provoquent à eux seuls un passage d'état de fonctionnement à l'état suivant,
- ils relient les états de fonctionnement techniques à des dispositifs de commande/régulation/d'avertissement spécifiques de l'état, destinés au conducteur,
- le code de traitement de défaut comporte une routine de pré-contrôle pour détecter des défauts dans le système de freinage au démarrage du véhicule et en ligne pendant le fonctionnement du véhicule, et exécute un traitement de défaut dépendant de l'état de défaut conformément aux états de fonctionnement des modules.

11. Dispositif selon la revendication 10, **caractérisé en ce que** l'ordinateur est organisé dans chaque cas de manière que soient fixés cinq états de fonctionnement techniques du système ou du module, avec les états suivants :
- pré-contrôle
- système ou module intact
- état de défaut 1
- état de défaut 2
- état de défaut 3, le nombre d'états de défaut étant variable en fonction du module.

12. Dispositif selon l'une des revendications 10 ou 11, **caractérisé en ce que** sont prévus des dispositifs d'avertissement qui sont conçus de manière spécifique suivant le caractère critique du défaut.

13. Dispositif selon l'une des revendications 10 à 12, **caractérisé en ce qu'**une mémoire de défaut est prévue.

14. Dispositif selon l'une des revendications 10 à 13, **caractérisé en ce qu'**un compteur de défauts est prévu.

15. Dispositif selon la revendication 11 ou l'une des revendications suivantes, **caractérisé en ce qu'**un sous-ordinateur est prévu pour plusieurs modules et est construit de manière à tolérer un défaut.
